Europäisches Patentamt

European Patent Office

Office européen des brevets

(11) Publication number: **0 285 647 B1**

## EUROPEAN PATENT SPECIFICATION

(45) Date of publication of patent specification: **05.01.94**

(51) Int. Cl.⁵: **B60C 1/00**, B29D 30/06, C08J 11/04

(21) Application number: **87906900.3**

(22) Date of filing: **05.10.87**

(86) International application number: **PCT/US87/02550**

(87) International publication number: **WO 88/02313 (07.04.88 88/08)**

(54) **TIRES HAVING TREADS DERIVED FROM PARTICULATE CURED RUBBER.**

(30) Priority: **06.10.86 US 916120**

(43) Date of publication of application: **12.10.88 Bulletin 88/41**

(45) Publication of the grant of the patent: **05.01.94 Bulletin 94/01**

(84) Designated Contracting States: **AT BE CH DE FR GB IT LI LU NL SE**

(56) References cited:

| | |
|---|---|
| US-A- 2 378 717 | US-A- 2 690 461 |
| US-A- 3 850 875 | US-A- 3 928 291 |
| US-A- 4 101 463 | US-A- 4 290 470 |
| US-A- 4 440 208 | US-A- 4 481 335 |

(73) Proprietor: **RUBBER RESEARCH ELASTOMER-ICS INC.**
**4500 Main Street Northeast**
**Minneapolis, MN 55421(US)**

(72) Inventor: **STARK, Fred, J., Jr.**
**4507 Willow Oak Lane**
**Minnetonka, MN 55343(US)**

(74) Representative: **Parr, Ronald Edward R.E. Parr & Co.**
**Colman House**
**Station Road**
**Knowle Solihull West Midlands B93 0HL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 285 647 B1

## Description

Field of the Invention

This invention relates to vehicle tires and particularly to treads for such tires.

Background of the Invention

Natural rubber and styrene-butadiene rubbers commonly are used in the manufacture of vehicle tires. Tire treads usually are of a polybutadiene rubber. The treads of new tires are formed during the tire molding process, whereas the treads of retreaded or "recapped" tires are formed by providing a layer of a virgin rubber molding composition circumferentially of the tire carcass and then subjecting the layer to molding to shape the tread and to form the tread grooves. The rubber molding material used for retreading may be a mixture of a natural or synthetic rubber (styrene-butadiene ("SBR")) containing an oil extender and a carbon black filler. To provide the tread with strength and reasonable wear resistance, virgin rubber materials are employed in both new and recapped treads.

Our US Patent US-A- 4,481,335 discloses a rubber composition derived from particles of scrap rubber that are surface treated with a liquid, curable polymeric binder. The surface-treated particulate material when added to virgin rubber stocks, provided moldable products. Although the physical properties of the resulting products (tensile strength, elongation-to-break) were reduced, the ultimate products were nonetheless useful in situations which did not demand the ultimate physical properties normally associated with products molded from virgin rubber molding stocks.

Summary of the Invention

The invention relates to vehicle tires having treads molded from rubber molding compositions that contain substantial amounts of surface-treated particles of previously cured rubber. Surprisingly, although the tensile strength and ultimate elongation properties of the resulting treads are, as expected, poorer than properties resulting from the use of virgin rubber molding stocks, the ability of the tread to resist wear is at least as good as and often better than the resistance to tread wear exhibited by treads made from virgin rubber molding stocks.

Accordingly, the present invention provides a method of manufacturing a vehicle tire, which comprises the step of forming the tread of the tire from a rubber molding composition comprising a particulate scrap vulcanised rubber material and a virgin rubber,

characterised in that the particulate rubber material comprises from 20% to 80% by weight of the rubber molding composition and has been obtained by surface-treating cured rubber particles with a liquid, sulfur-curable polymeric binder having ethylenic unsaturation and being soluble in benzene, hexane or both, the binder being such that it has softened the cured rubber particle surfaces to which it has been applied.

In the prior art US-A- 2 378 717 discloses rubber compositions obtained by vulcanising a mixture comprising a vulcanizate of a copolymer of butadiene-1,3 with acrylonitrile or styrene and an unvulcanised copolymer of butadiene-1,3 with acrylonitrile or styrene. However, there is no disclosure of the use of a liquid polymeric binder or of the use of the compositions in tyre treads.

US-A-4 101 463 discloses solid rubber tyres made by subjecting to vulcanizing conditions a mixture of vulcanised scrap rubber, a vulcanising agent such as sulphur and an accelerator and/or activator. In one form there is used in the mixture a rubber latex but there is no disclosure of a liquid polymeric binder.

US-A- 4 290 470 discloses porous, grooveless tyre treads made by bonding together a mass of particles of vulcanised rubber using as a binding agent a hydroxyl-tipped polybutadiene in conjunction with a diisocyanate together with a second binding agent comprising methylene bis aniline diisocyanate containing higher functionality isocyanates. There is no disclosure of the use of virgin rubber in the composition nor of any enhanced wear properties of the product.

Detailed Description

The treated particulate rubber materials that are used in the invention include those described in US-A-4,481,335. Such treated particulate rubber compositions contain, as the major ingredient, cured rubber particles that are derived desirably from scrap tires through a grinding procedure. The particles may be of natural or synthetic rubber or combinations thereof, as used in the manufacture of tires. Such tired usually are of natural rubber or of SBR, although synthetic rubbers such as neoprene and nitrile rubbers, butyl rubbers and ethylene-propylene diene rubbers are satisfactory for use in the invention. The particles useful in the invention may range substantially in size, but will normally be in the range of 20 to 300 mesh (U.S. Sieve Series), with 30 mesh being currently considered as the preferred size range. It will be understood that "30 mesh" particles refers to particles that may have a variety of particle sizes but all of the particles being sufficiently small as to pass through a 30 mesh screen.

The polymeric binder which is employed is preferably a liquid having a viscosity of 280° F of not greater than 1,000,000 cp, and preferably is pourable at room temperature. The polymeric binder is characterized by ethylenic unsaturation, desirably containing at least three and preferably at least ten mole percent unsaturation. The binder is soluble in hexane or benzene or both to the extent of at least 10 grams of binder per 100 ml. of solvent at room temperature. The binder softens cured rubber particles to which it is applied; if a small piece of rubber scrap is thinly coated with a polymeric binder and then heated for ten minutes at 105° F, the surface of the rubber piece will soften and can be rubbed away by the fingers. This feature is particularly striking when the scrap rubber piece is carbon-filled; the removal of a surface layer of the piece leaves a dark stain on the fingers. The polymeric binder is itself sulfur curable to form a strong, solid article. A cured rubber patty made from equal parts of binder and sulfur, when cured at 310° F for 30 minutes, should be solid and strong.

Homopolymers and copolymers of 1,4-butadiene and substituted butadienes are preferred as the liquid binder. Copolymers of 1,4-butadiene and styrene have given excellent results. Reference is again made to our US-A- 4,481,335 for an exemplary list of polymeric binders.

As curing agents for the treated, particulate rubber compositions used in the invention, sulfur and sulfur-containing materials are preferred. Elemental sulfur itself can be employed as a curing agent, as can various sulfur donor compounds. N-tert-butyl-2-benzothiazole sulfenamide, sold under the trademark "Santocure NS" by Monsanto Chemical Co., has given good results. The curing agent desirably is provided in an amount ranging from 50% to 500% by weight of the polymeric binder.

The treated particulate rubber materials employed in the invention may be produced by blending together in a suitable mixer such as a ribbon blender 100 parts by weight of cured rubber particles (e.g., particles derived as above from scrap tires), from

1 to 5 parts by weight, preferably from

2 to 4 parts by weight, of the polymeric binder, and an effective amount (ranging desirably from 50% by weight to 500% by weight based upon the weight of polymeric binder) of a curing agent such as sulfur or a sulfur donor. Blending is desirably performed at temperatures ranging from 100° F to 280° F, until a substantially homogeneous, thorough particulate mixture is obtained. Substantially all of the cured rubber particles are thus very lightly coated with the polymeric binder, which appears to be absorbed into the surfaces of the particles. The particulate composition desirably is generally dry to the touch and is substantially free flowing.

In accordance with the invention, the treated particulate scrap rubber material is blended with a virgin rubber stock before being molded as a tread of a vehicle tire. Virgin rubber stocks commonly include, per 100 parts of (uncured) virgin rubber, substantial amounts (e.g., 75 parts by weight) of a carbon black filler and up to 50 parts or more of an oil extender such as a high aromatic petroleum oil. Generally, the amounts of virgin rubber, carbon black and oil can be varied as desired. Blending of the treated particulate cured rubber material and the virgin rubber stock can be performed as desired, using conventional equipment.

In the experiments that follow, in which tires were retreaded using conventional techniques, the virgin rubber composition was first banded on a rubber mill, following which the curing agent and then the treated particulate mixture were added to the mill batch. Mixing for each batch took about five minutes. The mixed blend was then removed as a continuous strip and cooled.

In the retreading operation, the blended, cooled strip was fed to an extruder ("Orbitread", Myer Tire Supply). Tire carcasses were prepared by buffing away the existing tread and coating the resulting surface with a rubber adhesive (Myer Tire Supply, V-10 "Orbibond"), which was allowed to dry. The tread composition was applied using an AMF "Tire Builder" CX-200, and the tire treads were then molded in standard presses at 147° C for 45 minutes. The same tread design was used for all tires. Initial tread depth in each case was 8.33 mm. The tires were trimmed and aged for a minimum of five days before being mounted upon vehicles for testing. Balancing was done at the time of mounting. Although initial road service testing was done with used tires, subsequent testing often utilized new tires since there was an indication that the experimental treads would outlast the used tire casings upon which they were placed.

In each of the examples reported below, the treated particulate material was derived from scrap tires ground to 30 mesh and surface coated by being mixed with a liquid comprising, per 100 parts of the particles, 3 parts of a liquid styrene-butadiene resin, 1.5 parts of elemental sulfur, and 0.75 parts Santocure NS (Monsanto, above identified). The liquid styrene-butadiene resin was a clear amber liquid having a viscosity at 150° F of about 10,000 cp. The surface treated particles hereafter are sometimes referred to as "STP".

The experiments which follow employed three different standard virgin rubber stocks, each supplied by Copolymer Rubber and Chemical Company. The curing system used in each stock was a composition containing elemental sulfur, zinc oxide and other additives and sold by Production Systems, Inc. as "Curative SC-30-04". One virgin rubber stock, denoted "1847" contained a styrene-butadiene rubber having 23.5% bound styrene and including, per 100 parts of the rubber, 75 parts of carbon black and 50 parts of a high aromatic oil. Another virgin rubber stock, denoted "1849", contained slightly more carbon black and slightly more oil than the 1847 stock. Yet another virgin rubber stock, denoted "3652", contained less carbon black and less oil than the 1847 stock.

## Example I

Steel belted radial tires were provided with treads formed from a composition containing 40% by weight of STP and 60% by weight of rubber stock 1849 to which had been added, per 100 parts of the stock, 2.5 parts of Curative SC-30-04. The tires were mounted as the rear drive tires of a 1971 Oldsmobile Cutlass. After 14,400 kilometers of driving, tread wear was measured at 1.98 millimeters. The vehicle had a history of wearing its rear tires nearly bald from driving 32,000 kilometers.

## Example II

This example employed two used steel belted radial tire casings. One tire was retreaded with the 1849 virgin rubber stock to which had been added, per 100 parts of stock, 2-1/2 parts of the curative SC-30-04. The other tire was retreaded with a molding composition containing 60% by weight of the same 1849 stock and curative and containing 40% by weight of STP. The tires were mounted as the front tires of a 1980 Chevrolet Citation and driven for 17,600 kilometers. The tires were then transferred to the rear wheels and driven for an additional 23,360 kilometers. Close examination showed that the tires had identical tread wear of 3.18 mm, although the tire containing the STP showed more edge wear.

## Example III

Four new steel belted radial tires were retreaded with a retreading composition containing 40% by weight of STP and 60% by weight of the virgin rubber stock 1847 containing 2.5 parts of curative SC-30-04 per 100 parts of stock. All four tires were mounted on a 1983 Oldsmobile Diesel Custom Cruiser station wagon. Tread wear of each tire after 59,200 kilometers was measured at 3.97 mm. This vehicle usually had worn the treads of commercially available tires to near baldness after 64,000 kilometers.

## Example IV

Two new steel belted radial tires were retreaded with a retreading composition comprising 50% by weight of virgin rubber stock 3652 (containing 2.6 parts of curative SC-30-04 per 100 parts of stock) and 50% by weight of STP. The tires were mounted as the rear tires on a Ford Bronco II which was used as a delivery vehicle. This vehicle commonly had worn commercial tires to near baldness in 19,200-24,000 kilometers of driving. After 19,200 kilometers, the tires of this example were found to have a tread wear of 5.95 mm.

In each of the examples reported above, neither traction nor skid resistance of the experimental tires appeared to be affected.

Of substantial interest, the tires employing treads containing the STP appeared to run cooler than did control tires employing treads made from the same virgin stock but containing no STP. In one set of tests, after running at highway speeds for one to two hours at ambient temperatures greater than 27° C, differences in temperatures of the treads were measured by a pyrometer, and the treads containing the STP were found to have temperatures lower than the control tread temperatures by 5 C° or more.

Each of the tread compositions reported above were tested for hardness, tensile strength and elongation, the results being reported in the following table:

TABLE I

| Composition | Durometer, Shore A | Tensile Strength, psi | Ultimate Elongation % |
|---|---|---|---|
| 1849 | 60 | 2155 | 593 |
| 1849-60% STP- 40% | 56 | 1547 | 390 |
| 1847 | 61 | 2057 | 486 |
| 1847-60% STP -40% | 59 | 1592 | 400 |
| 1847-50% STP -50% | 59 | 1585 | 387 |
| 3652 | 66 | 2096 | 460 |
| 3652-50% STP -50% | 61 | 1531 | 380 |

It will be observed that the hardness, tensile strength and elongation of each of the rubber stocks was adversely affected by the addition of surface treated particles to the tread composition. Yet, the ability of the treads made from the surface treated particle compositions to resist tread wear was at least as good as that of treads produced from the virgin rubber stock alone. The excellent tread wear resistance resulting from the STP-containing tread compositions was unexpected but is highly desirable in that the invention provides yet another use for scrap tires and enables tires with good tread wear resistance to be manufactured from inexpensive materials derived from scrap tires.

While a preferred embodiment of the present invention has been described, it should be understood that various changes, adaptations and modifications may be made therein without departing from the scope of the appended claims.

The S.I. equivalents of units used herein are as follows:

| Temperature | | Particle size | |
|---|---|---|---|
| °F | °C | U.S. Sieve Series | S.I. Units |
| 100 | 38 | | |
| 105 | 40 | 20 | ca. 0.8mm |
| 150 | 65 | 30 | ca. 0.55mm |
| 280 | 138 | | |
| | | 300 | ca. 50 microns |
| 310 | 154 | | |

| p.s.i. | Pascal (Pa) |
|---|---|
| 1531 | $1.056 \times 10^7$ |
| 1547 | $1.067 \times 10^7$ |
| 1585 | $1.093 \times 10^7$ |
| 1592 | $1.098 \times 10^7$ |
| 2057 | $1.418 \times 10^7$ |
| 2096 | $1.445 \times 10^7$ |
| 2155 | $1.486 \times 10^7$ |

| Viscosity | |
|---|---|
| Centipoises (cp) | Newton second/metre$^2$ |
| 10,000 | 10 |
| 1,000,000 | 1,000 |

**Claims**

1. A method of manufacturing a vehicle tire, which comprises the step of forming the tread of the tire from a rubber molding composition comprising a particulate scrap vulcanised rubber material and a virgin rubber,
   characterised in that the particulate rubber material comprises from 20% to 80% by weight of the rubber molding composition and has been obtained by surface-treating cured rubber particles with a liquid, sulfur-curable polymeric binder having ethylenic unsaturation and being soluble in benzene, hexane or both, the binder being such that it has softened the cured rubber particle surfaces to which it has been applied.

2. A method according to Claim 1, in which the binder is in an amount from 1 to 5 parts by weight per 100 parts of said particles.

3. A method according to Claim 1 or 2, in which the particulate rubber material is present in the rubber molding composition in an amount of from 35% to 75% by weight of the composition.

6

4. A method according to Claim 3, in which the particulate rubber material is present in the rubber molding composition in an amount of from 40 % to 50% by weight.

5. A method according to any of the preceding claims, in which the rubber molding composition contains a curing agent in an amount in the range of 50% to 500% by weight of the polymeric binder.

6. A method according to any of the preceding claims, in which the polymeric binder is a liquid styrene-butadiene resin.

7. A method according to Claim 1, in which the polymeric binder is in an amount of from 1 to 5 parts by weight per 100 parts by weight of said particles, the binder has at least 3 mole per cent ethylenic unsaturation and has a viscosity at 138°C (280°F) of not substantially greater than 1,000 Newton second/metre$^2$ (one million centipoises) and a curing agent is present in an amount in the range of 50% to 500% by weight of the polymeric binder.

8. A method according to Claim 1, in which the particulate rubber material has been obtained by treating rubber particles derived from ground scrap tires, having a particle size such that they will pass a mesh of size 0.55mm (mesh 30 of United States Sieve Series) with a liquid comprising 3 parts of a liquid styrene-butadiene resin and 1.5 parts of elemental sulfur and 0.75 parts of N-tert.butyl-2-benzothiazole sulphenamide per 100 parts by weight of the particles.

9. A method according to any of the preceding claims, in which the tread is formed on a tire carcase in a re-treading process.

**Patentansprüche**

1. Verfahren zur Herstellung eines Fahrzeugreifens, welches den Schritt des Formens des Laufstreifens des Reifens aus einer Gummiformmischung aufweist, welche teilchenförmiges Abfallmaterial vulkanisierten Gummis und frischen Kautschuk enthält, dadurch gekennzeichnet, daß das teilchenförmige Gummimaterial zwischen 20 und 80 Gew.-% der Gummiformmischung ausmacht und durch Oberflächenbehandlung von vulkanisierten Gummiteilchen mit einem flüssigen, schwefel-vulkanisierbaren Polymerbinder mit einer Äthylenunsättigung und lösbar in Benzol, Hexan oder beidem behandelt worden ist, wobei der Binder von solcher Art ist, daß er die Oberflächen der vulkanisierten Gummiteilchen, auf welche er angewendet worden ist, erweicht hat.

2. Verfahren nach Anspruch 1, bei welchem der Binder in einer Menge von 1 bis 5 Gewichtsteilen pro 100 Teile der Teilchen vorhanden ist.

3. Verfahren nach Anspruch 1 oder 2, bei welchem das teilchenförmige Gummimaterial in der Gummiformmischung in einer Menge von 35 bis 75 Gew.-% der Mischung vorhanden ist.

4. Verfahren nach Anspruch 3, bei welchem das teilchenförmige Gummimaterial in der Gummiformmischung in einer Menge von 40 bis 50 Gew.-% vorhanden ist.

5. Verfahren nach einem der vorhergehenden Ansprüche, bei welchem die Gummiformmischung ein Vulkanisiermittel in einer Menge in dem Bereich von 50 bis 500 Gew.-% des Polymerbinders enthält.

6. Verfahren nach einem der vorhergehenden Ansprüche, bei welchem der Polymerbinder ein flüssiges Styrol-Butadien-Harz ist.

7. Verfahren nach Anspruch 1, bei welchem der Polymerbinder in einer Menge von 1 bis 5 Gewichtsteilen pro 100 Gewichtsteile der Teilchen vorliegt, der Binder wenigstens 3 Molprozent Äthylenunsättigung und eine Viskosität bei 180°C (280°F) von nicht wesentlich größer als 1000 Newton x sec./m$^2$ (10$^6$ Centipoises) aufweist und ein Vulkanisiermittel in einer Menge in dem Bereich von 50 bis 500 Gew.-% des Polymerbinders vorhanden ist.

8. Verfahren nach Anspruch 1, bei welchem das teilchenförmige Gummimaterial durch Behandlung von Gummiteilchen, welche aus gemahlenen Abfallreifen erhalten wurden und eine solche Teilchengröße haben, daß sie eine Maschenweite von 0,55 mm (mesh 30 der United States Sieve Series) passieren, mit Hilfe einer Flüssigkeit erhalten wurde, welche drei Teile eines flüssigen Styrol-Butadien-Harzes und 1,5 Teile elementaren Schwefel und 0,75 Teile N-tert.-Butyl-2-Benzothiazol-Sulphenamid pro 100 Gewichtsteile der Teilchen enthält.

9. Verfahren nach einem der vorhergehenden Ansprüche, bei welchem der Laufstreifen auf eine Reifenkarkasse in einem Runderneuerungsprozeß geformt wird.

**Revendications**

1. Procédé de fabrication d'un pneu pour véhicule, qui comprend l'étape consistant à former la bande de roulement du pneu à partir d'une composition de caoutchouc de moulage comprenant un matériau constitué de caoutchouc de rebut particulaire et un caoutchouc vierge,
caractérisé en ce que le matériau constitué de caoutchouc particulaire représente 20% à 80% en poids de la composition de caoutchouc de moulage et a été obtenu en soumettant des particules de caoutchouc vulcanisé à un traitement de surface par un liant polymère liquide durcissable par le soufre, présentant une insaturation éthylénique et soluble dans le benzène, l'hexane ou les deux, le liant étant tel qu'il a ramolli les surfaces des particules de caoutchouc vulcanisé sur lesquelles il a été appliqué.

2. Procédé selon la revendication 1, dans lequel le liant est utilisé en une quantité de 1 à 5 parties en poids pour 100 parties desdites particules.

3. Procédé selon la revendication 1 ou 2, dans lequel le matériau constitué par du caoutchouc particulaire est présent dans la composition de caoutchouc de moulage en une quantité de 35% à 75% en poids de la composition.

4. Procédé selon la revendication 3, dans lequel le matériau constitué par du caoutchouc particulaire est présent dans la composition de caoutchouc de moulage en une quantité de 40% à 50% en poids.

5. Procédé selon l'une quelconque des revendications précédentes, dans lequel la composition de caoutchouc de moulage contient un agent de durcissement en une quantité située dans une plage allant de 50% à 500% en poids du liant polymère.

6. Procédé selon l'une quelconque des revendications précédentes, dans lequel le liant polymère est une résine styrène-butadiène liquide.

7. Procédé selon la revendication 1, dans lequel le liant polymère est utilisé en une quantité de 1 à 5 parties en poids pour 100 parties en poids desdites particules, le liant comprend au moins 3% en moles d'insaturation éthylénique et possède une viscosité de 138°C (280°F) non substantiellement supérieure à 1 000 Newton seconde/mètre$^2$ (1 million de centipoises) et un agent de durcissement est présent en une quantité située dans la plage allant de 50% à 500% en poids du liant polymère.

8. Procédé selon la revendication 1, dans lequel le matériau constitué de caoutchouc particulaire a été obtenu en traitant des particules de caoutchouc issues de pneus de rebut broyés, ayant une dimension de particule telle qu'elles traversent une maille de 0,55 mm (mesh 30 de la Série de Tamis Américaine), par un liquide comprenant 3 parties d'une résine styrène-butadiène liquide et 1,5 partie de soufre élémentaire et 0,75 partie de N-tert.butyl-2-benzothiazole sulfénamide pour 100 parties en poids de particules.

9. Procédé selon l'une quelconque des revendications précédentes, dans lequel la bande de roulement est formée sur une carcasse de pneu dans un procédé de rechapage.